# EUROPEAN PATENT APPLICATION

(11) **EP 2 995 833 A1**
(43) Date of publication of application: **16.03.2016**
(21) Application number: 15162712.2
(22) Date of filing: 08.04.2015
(51) Int. Cl.: F16D 48/06

(54) **A CLUTCH-BY-WIRE SYSTEM AND A METHOD FOR CUSTOMISING SUCH A SYSTEM**

(71) Applicant: Scania CV AB, 151 87 Södertälje (SE)
(72) Inventor: Jarngren, Fredrik, 117 68 Stockholm (SE); Gustafsson, Erik, 151 47 Södertälje (SE)
(74) Representative: Eurenius, Karin Lisa Maria

(57) **Abstract**

A method for customising a clutch-by-wire system (10) of a motor vehicle including a clutch (1), a clutch actuator (4), a control unit (5) and a clutch pedal (6), wherein the control unit is configured to control the clutch actuator so as to actuate the clutch in response to a movement of the clutch pedal, such that a torque T transmitted via the clutch varies with a position x of the clutch pedal according to a predefined function f(x). The method comprises collecting input data relating to a desired characteristic of the clutch pedal, based on said input data defining said function f(x) according to which said torque T is to vary with the position x of the clutch pedal, and providing said function f(x) to the control unit.

## Description

### TECHNICAL FIELD OF THE INVENTION

The present invention relates to a method for customising a clutch-by-wire system of a motor vehicle according to the preamble of claim 1, to a clutch-by wire system according to the independent system claim, and to a motor vehicle comprising such a system. The invention also relates to a computer program and to a computer program product.

A clutch-by-wire system is here defined as a system for actuating the clutch in the drive train of a motor vehicle, in which system there is no mechanical connection between the clutch pedal, actuated by a driver of the vehicle, and the clutch. Instead, an electronic connection is provided, either a wireless electronic connection or an electronic connection by wire.

### BACKGROUND AND PRIOR ART

Conventional clutch systems used in motor vehicles rely on mechanical connections between a clutch pedal, controlled by a driver of the motor vehicle, and a clutch, commonly amplified by a clutch servo, configured to be actuated in response to a depression of the clutch pedal. Such systems may e.g. use a hydraulic connection, or simply a cable for pulling on the clutch. However, such systems require a mechanical connection between the cab of the motor vehicle and the engine compartment, which may be both bulky and problematic to install. In order to overcome this problem, clutch-by-wire systems have been developed, in which the mechanical connection is replaced by an electronic connection. Installation is in this way simplified, and the total size and weight of the system can be reduced. Moreover, the electronic connection makes it possible to allow the system itself to control the clutch in certain situations. This is useful, for example, to remove effects of harmful driver operations that may otherwise cause damage to the clutch.

A known type of clutch-by-wire system comprises a clutch, a clutch actuator for actuating the clutch, a control unit configured to control the clutch actuator, a clutch pedal, and a position sensor configured to sense a position of the clutch pedal. The control unit is configured to control the clutch actuator so as to actuate the clutch in response to a movement of the clutch pedal, such that a torque transmitted via the clutch varies with the position of the clutch pedal according to a predefined function. For example, there may be a linear relationship between the position of the clutch pedal and the torque transmitted via the clutch. The force required to actuate the clutch pedal is, as a result of the electronic connection, independent of the force required to actuate the clutch.

DE102006026975 describes attempts to provide a clutch-by-wire system which can be customised by providing an actuation force characteristic of the clutch pedal, which may be adjusted to individual requirements. In this way, the force dependency of conventional clutch systems is simulated, so that the driver needs to apply a certain, adjustable, force to the clutch pedal in order to disengage the clutch.

GB2465761 discloses a clutch-by-wire system and a method of customising such a system by means of providing a load with an adjustable spring characteristic, against which the clutch pedal is movable, and adjusting the spring characteristic. In this way, the same result as in DE102006026975 is achieved and the driver needs to apply a certain force in order for the clutch to disengage.

However, the above mentioned methods for customising clutch-by-wire systems are focused only on customising the force characteristics of the clutch pedal.

### SUMMARY OF THE INVENTION

It is an object of the present invention to provide, in at least some aspect, improved possibilities for customising a clutch-by-wire system. In particular, it is an object of the present invention to provide possibilities for customising the clutch actuator's response to an actuation of the clutch pedal.

At least the primary object is, according to a first aspect of the present invention, achieved by a method for customising a clutch-by-wire system of a motor vehicle including a clutch, a clutch actuator, a control unit and a clutch pedal, wherein the control unit is configured to control the clutch actuator so as to actuate the clutch in response to a movement of the clutch pedal, such that a torque T transmitted via the clutch varies with a position x of the clutch pedal according to a predefined function f(x), characterised in that the method comprises:
- collecting input data relating to a desired characteristic of the clutch pedal,
- based on said input data, defining said function f(x) according to which said torque τ is to vary with the position x of the clutch pedal,
- providing said function f(x) to the control unit.

With the proposed method, it is possible to customise the clutch-by-wire system by adjustment of the function that determines how the torque transmitted via the clutch varies with the position of the clutch pedal, e.g. by selecting a function from a set of predefined functions, or by adaptation of an existing function based on input data. In other words, the way that the clutch is actuated in response to a sensed change in position of the clutch pedal can be customised for a particular motor vehicle, driving mode, driver, haulage contractor, etc. For example, drivers have different physical predispositions and different preferences, and it is therefore useful to be able to adapt e.g. the stroke of the clutch pedal. For a motor vehicle such as a city bus, it is important to be able to take off smoothly from a stop and be able to slide on the clutch, and a suitable function f(x) can be selected for this purpose. For a motor vehicle such as a mining truck, it is instead desirable to obtain a quick response of the clutch and minor clutch wear, thus requiring a different function f(x). It may also, for the same motor vehicle, be useful to be able to adapt the way that the clutch is actuated in response to a depression of the clutch pedal to a current driving mode, in which case a particular function f(x) can be associated with each driving mode.

The proposed method can be initiated by a driver of the motor vehicle, such as when changing driving mode or when inserting a driver card, or at a service point of the motor vehicle.

According to an embodiment of the first aspect of the invention, the method comprises inputting said input data into a processing unit of the motor vehicle, in which processing unit said function f(x) is defined. Thus, the function f(x) can be defined within the motor vehicle.

According to another embodiment of the first aspect of the invention, the step of defining said function f(x) comprises selecting said function f(x) from a database. A plurality of functions f(x), adapted for different driving conditions, motor vehicles, drivers, etc., may be provided in the database, and the appropriate function f(x), given the current input data, is selected from the database. This is a convenient and quick way of providing a suitable function f(x).

According to another embodiment of the first aspect of the invention, the step of defining said function f(x) comprises manually defining said function f(x). This is suitable for defining a function f(x) which is adapted to the particular motor vehicle, e.g. at a service point of the vehicle.

According to an embodiment of the first aspect of the invention, the step of collecting input data comprises collecting driver data from a driver card of a driver of the motor vehicle. The driver card is a digital tachograph card that makes it possible to identify the driver and allows for storage of driver activity data. By using input data from the driver card, it is possible to quickly customise the clutch-by-wire system according to the preferences of individual drivers.

According to another embodiment of the first aspect of the invention, the step of collecting input data comprises collecting motor vehicle data. The motor vehicle data includes e.g. motor vehicle model, motor vehicle weight, tire pressure, fuel quality, etc. The clutch-by-wire system can thus be customised for the current motor vehicle conditions. Of course, input data relating to vehicle conditions may be combined with input data relating to e.g. driving mode or driver data.

According to another embodiment of the first aspect of the invention, the step of collecting input data comprises collecting driving mode data associated with a driving mode of the motor vehicle. The characteristic of the clutch pedal may in this way be adapted for different driving modes, so that e.g. a "power mode" and an "economy mode" of the motor vehicle use different functions f(x).

According to another embodiment of the first aspect of the invention, the step of collecting input data comprises prompting a user to enter input data. The input data can e.g. be input data directly related to a desired characteristic of the clutch pedal, but may also be data related to driver preferences, haulage contractor preferences, foreseen driving conditions, etc., associated with one or more input parameters such as driver length, stroke, motor vehicle weight, etc. The user can be a driver of the motor vehicle, but also e.g. a technician or a mechanic serving the motor vehicle.

According to another aspect of the present invention, at least the primary object is achieved by a clutch-by-wire system for a motor vehicle, comprising:
- a clutch,
- a clutch actuator,
- a control unit,
- a clutch pedal,
- a position sensor configured to sense a position x of the clutch pedal,
wherein the control unit is configured to control the clutch actuator so as to actuate the clutch in response to a movement of the clutch pedal, such that a torque τ transmitted via the clutch varies with the position x of the clutch pedal according to a predefined function f(x), characterised in that the system comprises:
- collection means for collecting input data relating to a desired characteristic of the clutch pedal,
- a processing unit configured to, based on said input data, define said function f(x) according to which said torque τ is to vary with the position x of the clutch pedal, and provide said function f(x) to the control unit.

The advantages of such a system as well as preferred embodiments thereof are apparent from the above discussion relating to the proposed method.

According to an embodiment of the second aspect of the invention, the system further comprises a database comprising a plurality of selectable functions f(x), and the processing unit is configured to define said function f(x) by selection from said database.

According to a further aspect of the invention, the object is achieved by a motor vehicle comprising the proposed clutch-by-wire system.

According to a further aspect of the invention, the object is achieved by a computer programme comprising computer programme code for causing a computer to implement the proposed method when the computer programme is executed in the computer.

According to a further aspect of the invention, the object is achieved by a computer program product comprising a non-transitory data storage medium which can be read by a computer and on which the program code of the proposed computer program is stored.

Other advantageous features as well as advantages of the present invention will appear from the following description.

### BRIEF DESCRIPTION OF THE DRAWINGS

Embodiments of the invention will in the following be described with reference to the appended drawings, in which:
- Fig. 1: schematically shows a clutch-by-wire system according to an embodiment of the invention,
- Fig. 2: is a flow chart illustrating a method according to an embodiment of the invention, and
- Fig. 3: schematically shows torque τ as a function of position x of the clutch pedal for different functions f(x).

### DETAILED DESCRIPTION OF EMBODIMENTS OF THE INVENTION

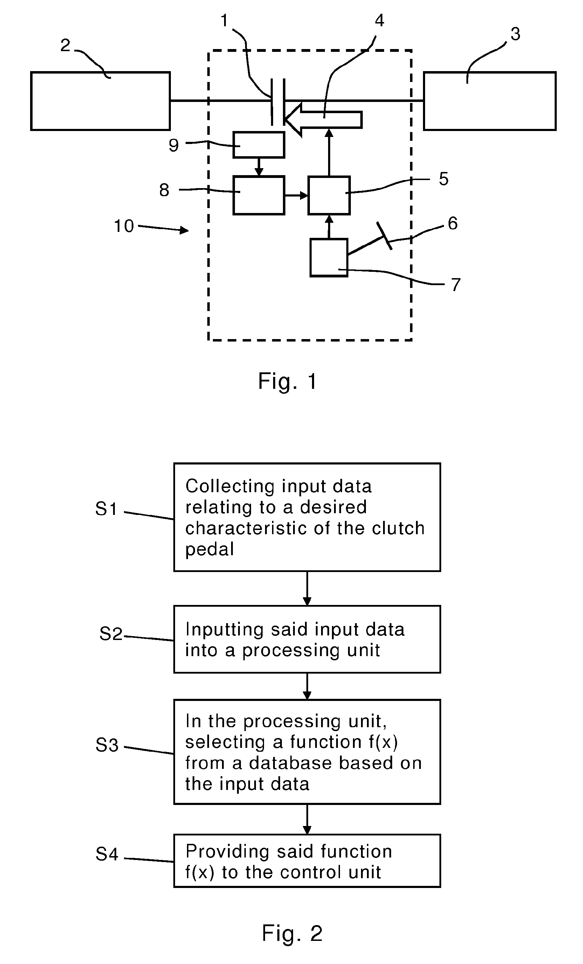

A clutch-by-wire system 10 for a heavy motor vehicle according to an embodiment of the invention is schematically shown in fig. 1. The system 10 comprises a clutch 1 via which torque τ is transmitted from an engine 2 to a gear box 3 in a powertrain of the vehicle. The system 10 further comprises a clutch actuator 4 configured to actuate the clutch 1, a control unit 5, a clutch pedal 6, and a position sensor 7 configured to sense a position x of the clutch pedal 6. The system 10 also comprises a processing unit 8 and collection means 9 for inputting and collecting input data relating to a desired characteristic of the clutch pedal 6. The collection means 9 typically includes a data input device, such as a card reader, a keyboard, a touch-screen, a scanning device or similar, as well as a memory for storing the data. The control unit 5 is configured to control the clutch actuator 4 so as to actuate the clutch 1 in response to a movement of the clutch pedal 6, such that a torque τ transmitted via the clutch 1 varies with the position x of the clutch pedal 6, as sensed by the position sensor 7, according to a predefined function f(x). The processing unit 8 is configured to define the function f(x) based on the input data collected using the collection means 9.

An embodiment of the method according to the invention is shown in fig. 2. In the shown embodiment, input data relating to a desired characteristic of the clutch pedal is collected in a step S1 using the collection means 9. This step may include e.g. collecting driver data from a driver card of the driver using collection means 9 in the form of a card reader, or collecting driver data which is inputted using a touchscreen, a keyboard or similar. It may also, alternatively or additionally, include collecting driving mode data relating to a selected driver mode of the motor vehicle, and/or collecting motor vehicle data relating to e.g. motor vehicle weight etc. The collected input data is in a step S2 inputted into the processing unit 8. Based on said input data, the processing unit 8 in a step S3 selects a suitable function f(x) from a database. The selected function f(x) defines how the torque τ transmitted via the clutch 1 from the engine 2 to the gearbox 3 will vary with the sensed position x of the clutch pedal 6. In a step S4, said selected function f(x) is provided to the control unit 5. During subsequent driving of the motor vehicle, the selected function f(x) is used to control the transmitted torque τ based on the position x of the clutch pedal 6 as sensed by the position sensor 7.

An alternative to selecting a suitable function f(x) from a database is to manually define a function f(x) to be used. This can be performed e.g. by using collection means 9 comprising an input data device such as a touchscreen or the like to define a curve showing transmitted torque τ as a function of position x of the clutch pedal 6. The function f(x) may be defined at a service point of the motor vehicle and provided to the control unit 5 using means for data communication, but it may also be defined within the motor vehicle. A user, such as a driver or a technician, may be prompted by the system 10 to enter certain input data, either directly related to a desired characteristic of the clutch pedal 6 or related to e.g. driver preferences, haulage contractor preferences, foreseen driving conditions, etc., associated with one or more input parameters such as driver length, stroke, motor vehicle weight, etc. Also in the case when the function f(x) is selected from a database, the selection may be carried out within the motor vehicle or at e.g. a service point of the motor vehicle. It is possible to use data communication means to select a suitable function f(x) from a database located outside the motor vehicle, and perform the remaining steps within the motor vehicle. This can be realised using e.g. wireless data communication means.

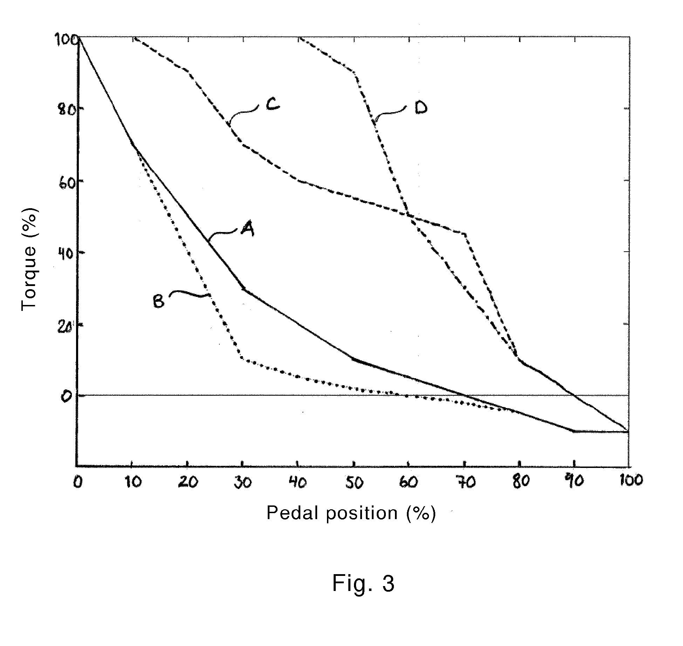

Fig. 3 shows a few exemplary curves schematically illustrating how the torque τ may be set to vary with the position x of the clutch pedal 6 according to τ=f(x). The torque τ is shown in percent of maximum torque that the powertrain can deliver, usually the maximum torque of the engine. The torque τ may alternatively be shown in percent of the maximum torque the clutch can transmit, when the clutch is fully engaged. In order to compensate for possible errors in clutch actuator 4 position and guarantee that it will always be possible to actuate the clutch 1, it is possible to extend the clutch actuator 4 slightly more than what is normally necessary to achieve a fully open clutch 1, thereby the presence of negative values of torque τ. The position x is shown in percent of full depression of the clutch pedal 6.

The curve A represents a standard function f_{A}(x), according to which a depression of the clutch pedal 6 gives an immediate response and results in a reduction of the torque τ transmitted via the clutch 1. The more the clutch pedal 6 is depressed, the less torque τ is transmitted. The slope of the curve A decreases with increased depression, so that the driver's control of the transmitted torque τ is larger with a more depressed clutch pedal 6. The clutch pedal 6 has a contact point at 70 % depression, representing a 0 % transmission of torque via the clutch 1. Depression beyond this point does not result in a change in the transmitted torque τ.

The curve B represents a function f_{B}(x) by means of which it is possible to achieve an increased control of the transmitted torque τ with the clutch pedal 6 relatively far depressed, thanks to very moderate slopes of the curve B for depressions of the clutch pedal 6 by more than 30 %. A clutch-by-wire system 10 using the function f_{B}(x) to control the clutch actuator 4 is suitable for applications requiring a large amount of controlled creeping of the vehicle, such as during high-precision operations. The function f_{B}(x) can e.g. be defined/selected for a specific driving mode of a motor vehicle, or for a particular motor vehicle intended to be used in such applications.

The curve C represents a function fc(x) which has a point of contact at 90 % depression of the clutch pedal 6. The response of the clutch actuator 4 when releasing the clutch pedal 6 is faster than for the curves A and B, which is suitable for heavy motor vehicles that can only be set in motion using relatively high torques. The moderate slope of curve C at a pedal position between 40 % and 70 % offers an increased clutch control at a torque which is high enough to get the vehicle moving, thus enabling high precision operations for a heavy motor vehicle. The function fc(x) can suitably be defined/selected based on input vehicle data relating to e.g. vehicle weight or vehicle type.

The curve D represents a function f_{D}(x) which does not use the entire span of the clutch pedal 6. An initial depression of the clutch pedal 6 down to 40 % pedal position does not result in any change in transmitted torque τ. The function f_{D}(x) can suitably be defined/selected based on input data relating to driver preferences, such as driver data from a driver card.

All of the process steps, as well as any sub-sequence of steps, described above with reference to fig. 2 may be controlled by means of a programmed computer apparatus. Moreover, the invention extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/ Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A method for customising a clutch-by-wire system (10) of a motor vehicle including a clutch (1), a clutch actuator (4), a control unit (5) and a clutch pedal (6), wherein the control unit (5) is configured to control the clutch actuator (4) so as to actuate the clutch (1) in response to a movement of the clutch pedal (6), such that a torque τ transmitted via the clutch (1) varies with a position x of the clutch pedal (6) according to a predefined function f(x),
***characterised in***
**that** the method comprises:
- collecting input data relating to a desired characteristic of the clutch pedal (6),
- based on said input data, defining said function f(x) according to which said torque τ is to vary with the position x of the clutch pedal (6),
- providing said function f(x) to the control unit (5).

2. The method according to claim 1, wherein the method comprises:
- inputting said input data into a processing unit (8) of the motor vehicle, in which processing unit (8) said function f(x) is defined.

3. The method according to claim 1 or 2, wherein the step of defining said function f(x) comprises selecting said function f(x) from a database.

4. The method according to claim 1 or 2, wherein the step of defining said function f(x) comprises manually defining said function f(x).

5. The method according to any one of the preceding claims, wherein the step of collecting input data comprises collecting driver data from a driver card of a driver of the motor vehicle.

6. The method according to any one of the preceding claims, wherein the step of collecting input data comprises collecting motor vehicle data.

7. The method according to any one of the preceding claims, wherein the step of collecting input data comprises collecting driving mode data associated with a driving mode of the motor vehicle.

8. The method according to any one of the preceding claims, wherein the step of collecting input data comprises prompting a user to enter input data.

9. A clutch-by-wire system (10) for a motor vehicle, comprising:
- a clutch (1),
- a clutch actuator (4),
- a control unit (5),
- a clutch pedal (6),
- a position sensor (7) configured to sense a position x of the clutch pedal (6),
wherein the control unit (5) is configured to control the clutch actuator (4) so as to actuate the clutch (1) in response to a movement of the clutch pedal (6), such that a torque τ transmitted via the clutch (1) varies with the position x of the clutch pedal (6) according to a predefined function f(x),
***characterised in***
**that** the system (10) comprises:
- collection means (9) for collecting input data relating to a desired characteristic of the clutch pedal (6),
- a processing unit (9) configured to, based on said input data, define said function f(x) according to which said torque τ is to vary with the position x of the clutch pedal (6), and provide said function f(x) to the control unit (5).

10. The clutch-by-wire system (10) according to claim 9, wherein the system (10) further comprises a database comprising a plurality of selectable functions f(x), and wherein the processing unit (8) is configured to define said function f(x) by selection from said database.

11. A motor vehicle comprising a clutch-by-wire system (10) according to claim 9 or 10.

12. A computer program comprising computer program code for causing a computer to implement a method according to any of the claims 1-8 when the computer program is executed in the computer.

13. A computer program product comprising a non-transitory data storage medium which can be read by a computer and on which the program code of a computer program according to claim 12 is stored.
